# EUROPEAN PATENT APPLICATION

(11) **EP 1 087 593 A1**
(43) Date of publication of application: **28.03.2001**
(21) Application number: 99118016.7
(22) Date of filing: 21.09.1999
(51) Int. Cl.: H04M 1/04, A45F 5/02

(54) **Three-in-one back clip**

(71) Applicant: Fan, Eagle, Chupei City, Hsinchu 302 (TW)
(72) Inventor: Fan, Eagle, Chupei City, Hsinchu 302 (TW)
(74) Representative: Müller-Boré & Partner Patentanwälte

(57) **Abstract**

This three-in-one back clip (20) includes a fixed structure (201) and a clip structure (202). The fixed structure (201) is a fixing member (21)(for example, attached to a mobile phone) and the clip structure (202) is connected to that fixed structure. By way of a multi-stage adjusting structure, the clip structure (202) and the fixed structure (201) could be either in a connected state or a separated state. The clip structure (202) could also be turned on the top of the fixed structure (201) and thus provide great conveniences for the users. Besides, the clipping function of this back clip structure invention does not need any spring leaves. Therefore, it could effectively reduce the number of parts needed and simplify the effectiveness of the structure design.

## Description

### Field of the Invention

This invention is about a three-in-one back clip, especially one with departing, rotating and fastening function. This is a simple device that could achieve clipping function without using spring leaves.

### Background of the Invention

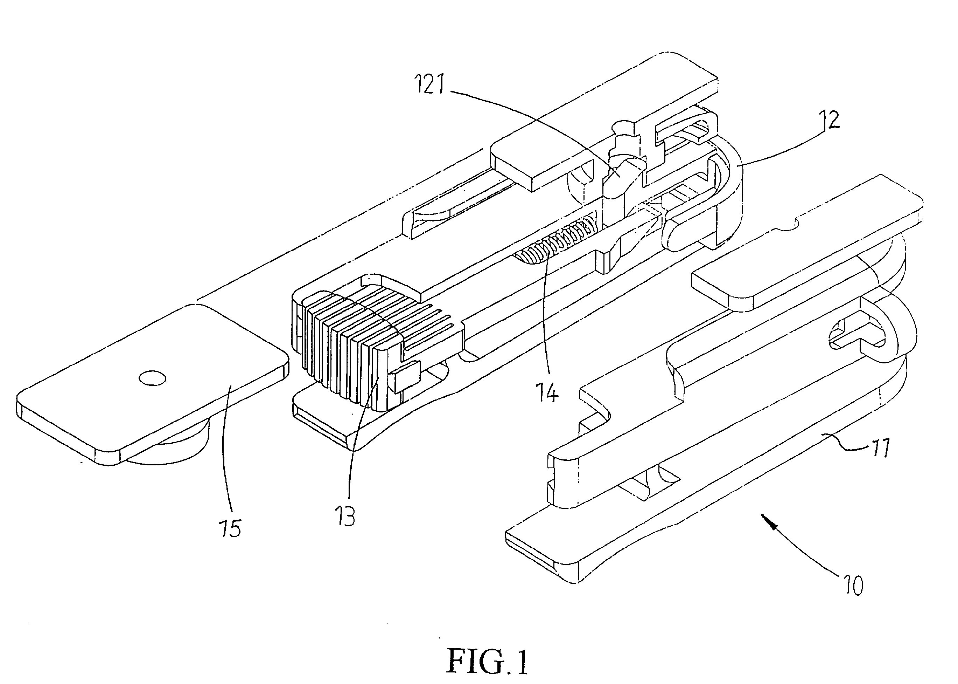

Figure 1 shows a back chip according to the state of the art. The back clip structure 10 includes a housing 11, a fixing member 12, a push member 13, a spring 14 and a moving block 15. Within which, the push member 13 and the spring 14 are directly placed into the pre-integrated mold of the housing 11 before hand, and thus all are integrally molded. When in use, the fixing member 12 is clutched onto the moving block 15, and this motion will combine the outer covering 11 and moving block 15 together. With the pressure from the push member 13 combined with the function of the spring 14, fixing member 12 and a molded catch block 121 are pressed and thus separate the housing 11 and the moving block 15. Consequently, when the housing 11 is fixed to the moving block 15, the housing 11 could be rotated randomly and cannot be fixed. This could cause inconveniences to the users. Besides, although the traditional one-part mold structure could reduce the number of parts needed, but the connecting structure is too complicated and could be improved. Therefore it is the aim of the invention to achieve a simplified structure of a clip that could provide the users with adjustable angular magnitude to rotate and to fasten.

### Summary of the Invention

The main purpose of this invention is to provide a three-in-one back clip. The adjuster is designed with punched holes with continuous wave-shaped edge. This enables the adjuster to adjust in three stages. The vertical extended end of the clip part could be moved to attach to the outer side, the inner side and the edge of the fixture notch. This could either separate or integrate the clip structure and the fixed structure. The clip structure can also be rotated on the top of the fixed structure.

The secondary purpose of this invention is to demonstrate a three-in-one back clip. At the relative positions of the bottom of the catch block and the inner step-shaped edge side of the fixed stand are designed with matching mounting and dented spots. This design could provide multi-stage rotation for adjustment.

In order to clearly describe the characteristics, the purposes and the effectiveness of this invention in detail, the following figures are provided for illustration.

### Brief description of the Drawings

- Fig. 1: is a diagram of the traditional back clip structure.
- Fig.2: is an decomposed elevation breakdown view of this invention.**(1)**
- Fig.3: is an decomposed elevation breakdown view of this invention. **(2)**
- Fig.4: is an decomposed elevation breakdown view of this invention. **(3)**
- Fig.5: is a three-dimensional diagram of the elevation appearance view of this invented back clip structure.
- Fig. 6: is a section view of this invented back clip structure.
- Fig.7: is a diagram of the fixed structure and the clip structure in a separating state.
- Fig.8: is a diagram of the fixed structure and the clip structure in a separating state.
- Fig.9: is a diagram of the fixed structure and the clip structure in a separating state.

### Detailed Description of the Invention

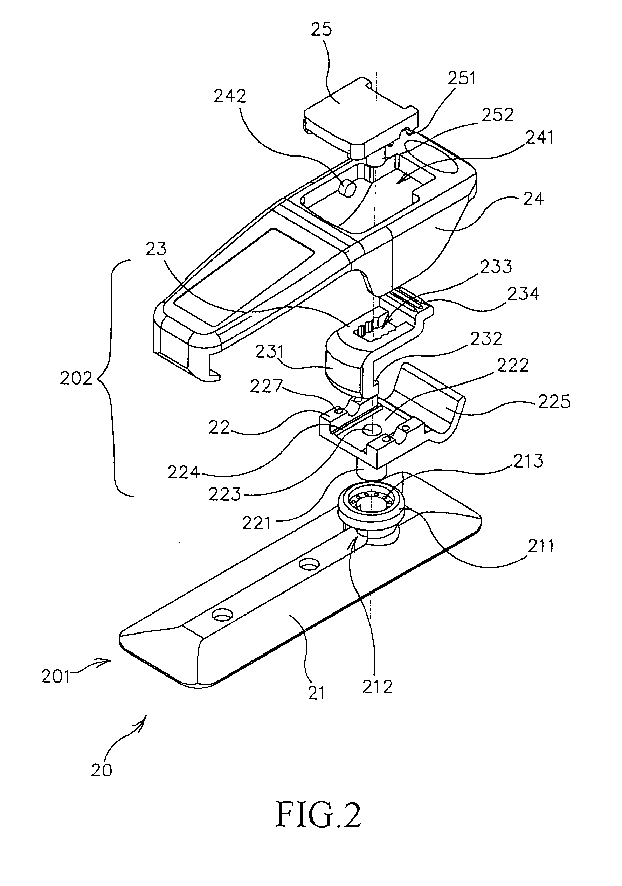

Please refer to Figure 2, a decomposed elevation breakdown view of this invented back clip structure. This back clip structure 20 includes a fixed structure 201 and a clip structure 202. The fixture 201 is a fixing member 21, while the clip structure 202 includes a catch member 22, an adjuster 23, an housing 24 and a fastening member 25. One end of the fixing member 21 is attached to a mobile phone (not demonstrated in the figure), while the other end is properly designed with a fixed stand 211 standing out. The cross-section of the fixed stand 211 is a T-shaped hollow cylinder. At the proper position, there is a notch 212 at one side of its bottom and a step-shaped edge at its inner side. There are multiple denting spots 213 at the surface ring of the step-shaped edge.

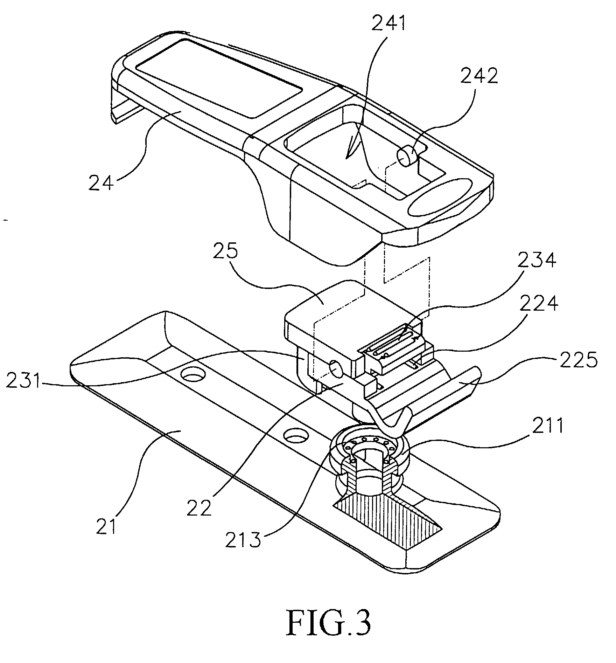

The pressing portion 22 is a component with flexibility. There is a hollow cylinder 221 at its bottom. It can be inserted into the fixed stand 211. On the top of this pressing portion, there is a fillister 222 in the center. The center of fillister 222 has a punched hole 223 to link with the hollow cylinder. On the top of the fillister 222, there are two sliding tracks 224. One side of the pressing member 22 faces outside which extends out and is installed with a pressing portion 225. There is a curve-shaped design between the pressing portion 225 and the main body of the pressing member 22. Besides, multiple salient spots 226 are designed at the bottom ring of the hollow cylinder 221, which are matched with the dented spots 213 at the surface of the fixed stand 221 (as shown in fig. 3).

The central section of the adjuster 23 is placed flatly on the top of the fillister 222 of the pressing member 22. It can slide on the top of the sliding track 224 in a parallel motion. There is a catch component 231 extending vertically from one end of the adjuster 23 and a hook 232 is at the bottom of the catch component 231. The position of the hook 232 corresponds with the position of the notch 212 of the fixed stand 211. A punched hole 233 with continuos wave-shaped edges on both of its edges is placed in the middle of the pressing member 22. The wave-shaped edge demonstrated in the practical example of this invention is a three-stage continuous waveform. A step-shaped edge is on the other side of the pressing member 22. There are outstanding salient components 234 on the surface side of the step-shaped edge.

The housing 24 corresponds to top of the fixing member 21. A through hole 241 is placed in correspondent with the fixed stand 211. There is a salient axle 242 on each side of the through hole 241.

The fastening member 25 is designed to match up with the pressing member 22 and combined with the salient axles 242 of the housing 24. Multiple salient cylinders 251 are installed at both of the edges of the pressing member 22 to match up with the denting spots 227. There is also a bottom shaft 252 at its bottom side. Insert the bottom shaft 252 through the adjuster member 23 of 233. Place it through the punched hole 223 into the fillister 222 and connect with the pressing member 22 tightly. Then, connect and fasten in the same time inside the through hole 241 of the housing.

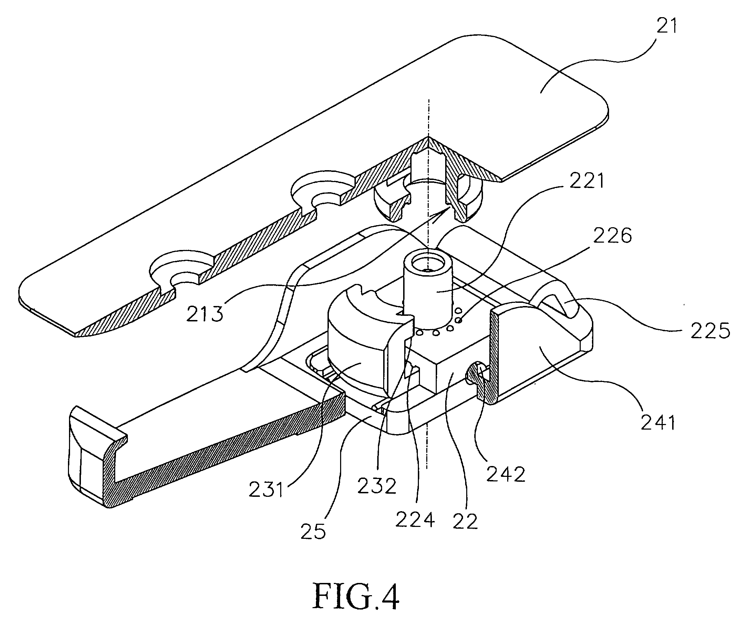

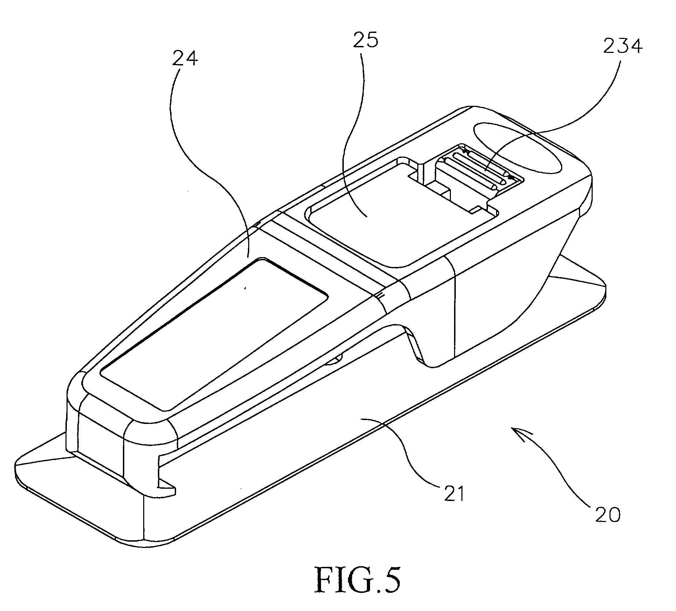

Fig.3 and Fig.4 provide the three-dimensional elevation breakdown view of this invention. One can put the fillister 222 of pressing member 22 on the top of the adjuster 23, combine it with the fastening member 25, and put adjuster 23 in between the two. Then, connect both sides with the salient cylinders 242 of the housing 24 and fasten it to the inside of the through hole 241 of the housing 24. Matching the mounting spots 226 surrounding the root of cylinder 221 of the catch member 22 with the denting spots 213 on the surface on the step-shaped rim inside the fixed structure 211, one can connect it to the fixing member 21. At this time, the surface of that fixing member 25 and the salient component 234 of the adapter 23 are used to fill in the through hole 241 of the housing 24. Besides, there is a gap between the fixing member 25 and the salient component 234. This gap can make the parallel sliding and adjusting easier. All the above components of this invention make a complete structure of this back clip 20(as shown in fig. 5).

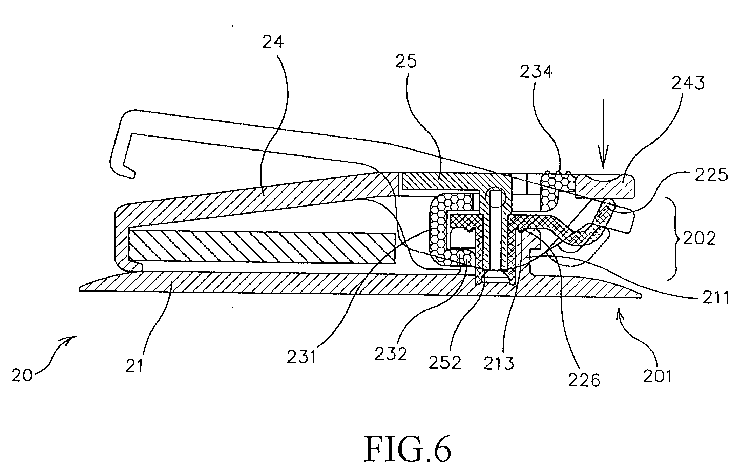

Figure 6 is a section view of this invented back clip structure. To enforce the degree of connection among the pressing member 22, the adjuster 23, and the fastening member 24, a screw 30 is used. One can press the pressing component 243 at the end of the housing 24 and also the pressing portion 225 at the top of the pressing member 22. Using the salient cylinder 242 at the inner side of its through hole 241 as the bearing point, one can make the other end open to a proper angle. Because of the flexibility function of the pressing portion 225, it will come back to its original position and thus the user could clip it to the place he or she desires. The whole structure does not need any spring to clip and thus effectively reduces the number of parts needed and therefore simply the design of the component structure.

The principle of this motion is to adjust the salient portion 234 and slide it in a parallel motion. The middle part possesses a three-stage wave-shaped punched hole 233. The lines of the first section, the second section and the third sections could clutch the bottom shaft 252 of the fastening member 25. Therefore, the fastening member 21 of the clip structure 20 could either separate, fasten, or rotate directly on the top of the fastening member 21.

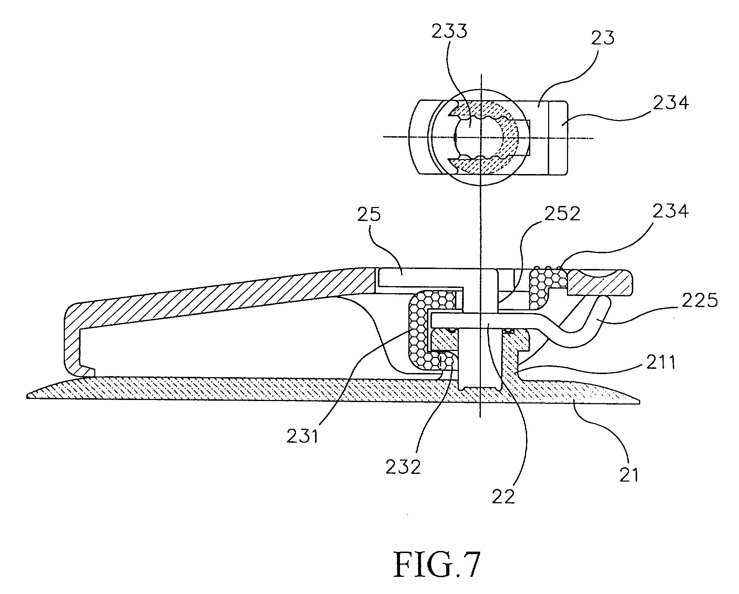

Fig. 7 is a diagram of the fixed structure and the clip structure when they are in a fastening condition. The top part of the catch component 231 of the adapter 23 has a hook 232 that clutch the inside of the notch 212 of the fastening stand 211. This causes the back clip structure connect tightly and will not be able to rotate on top of fastening stand 211. So, the back clip structure 20 will remain at its fastening position and will not rotate without control when in use.

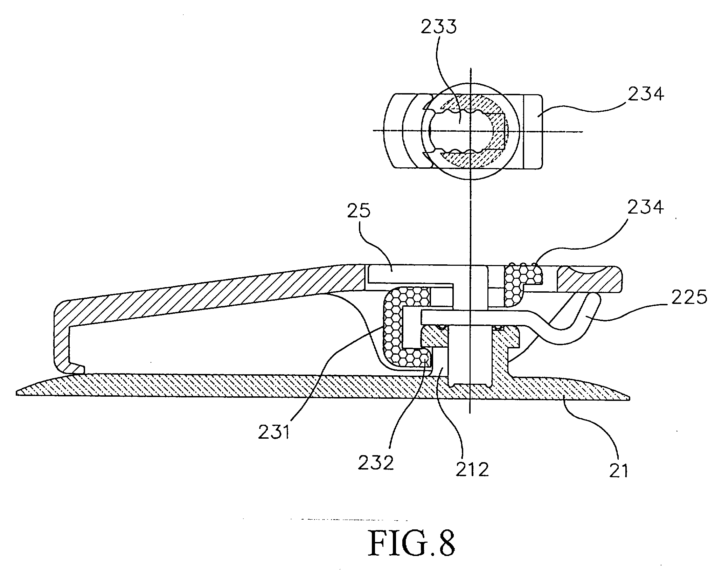

Fig. 8 is a diagram of the fixed structure and the clip structure when they are in a spinning condition. The user can adjust the salient portion 234 of the adjuster 23. This will make adjuster slide in a parallel motion along with the sliding track 224 of the denting notch 222 (not demonstrated in the figure). This motion will cause the punched hole 233 to adjust to its second wave-shaped edge and thus clutch with the bottom shaft 252 of the fastening member 25 And, the hook of the catch component 231 will match with the edge of the notch 212 of the fastening stand 211. But, the hook will still be confined by the mounting object of the fastening stand 211, and thus the clip structure 202 can still spin on the top of fastening stand 211. Besides, because of the designed mounting spots and denting spots 226 and 213 (as shown in figure 3 and figure 4), the clip structure 202 can still spin in multiple stages. It could still spin so that that user can adjust its position when in use.

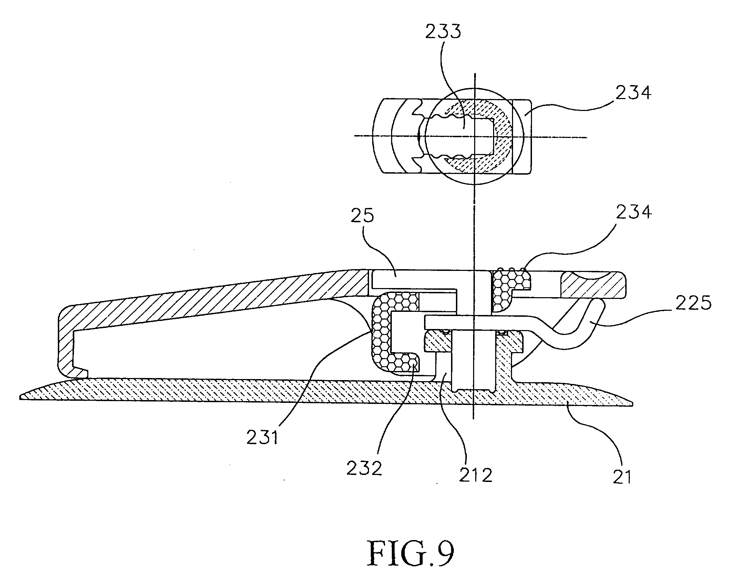

Figure 9 is a diagram of the fixed structure and the clip structure when they are in a separated condition. The user can adjust the mounting portion 234 of the adjuster 23. The user can adjust the punched hole 233 to its wave-shaped section and clutch it to the bottom shaft 252 of the fastening member 25. The hook 232 of the catch component 231 will match with the outside area of the notch 212 of the fastening stand 211. This will separate it from the outside edge of the fastening stand 211 and will separate the clip structure 202 and the fixed structure 201. By adjusting the adjuster in a parallel motion, the catch portion can clutch the outer side, the edge, and the inner side of the fixed stand. This could make the clip structure and the fixed structure be separated, rotated, or fastened. This clip function does not need any back clip structure that requires spring.

## Claims

1. A three-in-one back clip (20) includes a fixed structure (201) and a clip structure (202) comprising:
- a fixing member (21), preferably fixed to a mobile phone, a fixed stand (211) with a hollow cylinder-shape design (221) having notches (212) on a proper side,
- a housing (24), placed on the top of the fixture member (21) having a punched hole (223) placed at the relative position to the fastening stand (211),
- a catch member (22), placed inside the fastening stand (211) with a salient block on its bottom, having a dented notch (227) on its top and a catch portion extended from its outside,
- an adjuster (23), placed in the dented notch of the catch member (22) having a catch portion (231) from its vertical extension at the position relative to the notch of the fastening stand (211), a step-shape edge on the other end, while punched holes with wave shaped edge are in the center and
- a fastening member (25), fastened in the through hole (241) of the housing (24).

2. A three-in-one back clip as claimed in claim 1, wherein the fixed stand (211) is a hollow cylinder structure (221) with its crosssection shaped like a T.

3. A three-in-one back clip as claimed in claim 1 or 2, wherein the inner edge of the fixed stand (211) is shaped like steps and the surface of the step-shaped edge is designed with mounting spots (213).

4. A three-in-one back clip as claimed in anyone of claims 1 to 3, wherein the pressing member (22) is a flexible structure.

5. A three-in-one back clip as claimed in anyone of claims 1 to 4, wherein there exists a curve-shaped structure designed between the pressing portion (225) and the pressing member (22).

6. A three-in-one back clip as claimed in anyone of claims 1 to 5, wherein there are multiple mounting spots (213) designed at the bottom ring of the cylinder.

7. A three-in-one back clip as claimed in anyone of claims 1 to 6, wherein the cylinder is hollowed and connected to the center of the denting shaft of the pressing member.

8. A three-in-one back clip as claimed in anyone of claims 1 to 7, wherein both sides of the denting shaft are designed with sliding tracks (224).

9. A three-in-one back clip as claimed in anyone of claims 1 to 8, wherein the connection is by matching the denting spots and the mounting spots of the pressing member and the pressing component.

10. A three-in-one back clip as claimed in anyone of claims 1 to 9, wherein both sides of the through hole (241) are designed with salient axles.

11. A three-in-one back clip as claimed in anyone of claims 1 to 10, wherein both the fastening member (25) and the pressing member should connect and fixed at the same time to the saline axle (242).

12. A three-in-one back clip as claimed in anyone of claims 1 to 11, wherein the bottom of the fastening member (25) is designed with a salient shaft so as to insert into the cylinder of the pressing member.

13. A three-in-one back clip as claimed in anyone of claims 1 to 12, wherein one side of the adjuster is step-shaped and the other side has multiple salient regions.

14. A three-in-one back clip as claimed in anyone of claims 1 to 13, wherein the bottom of the catch portion is a hook (232).

15. A three-in-one back clip as claimed in anyone of claims 1 to 14, wherein the fastening member and the pressing member are connected by a screw.
